# EUROPÄISCHE PATENTSCHRIFT

(11) **EP 1 971 791 B1**
(45) Veröffentlichungstag und Bekanntmachung des Hinweises auf die Patenterteilung: **20.03.2013**
(21) Anmeldenummer: 06849119.0
(22) Anmeldetag: 22.12.2006
(51) Int. Cl.: F16D 65/14, F16D 67/06, F16D 41/08, F16D 47/04

(54) **SCHALTBARER FREILAUF UND ELEKTROMECHANISCHE FAHRZEUGBREMSE MIT DEM SCHALTBAREN FREILAUF**
SELECTIVE FREEWHEELING MECHANISM AND ELECTROMECHANICAL VEHICLE BRAKE COMPRISING A SELECTIVE FREEWHEELING MECHANISM
MECANISME ROUE LIBRE DE DEBRAYAGE ET FREIN ELECTROMECANIQUE DE VEHICULE POURVU DU MECANISME ROUE LIBRE DE DEBRAYAGE

(30) Priorität: 04.01.2006 DE 102006000746
(43) Veröffentlichungstag der Anmeldung: 24.09.2008
(73) Patentinhaber: ROBERT BOSCH GMBH, 70442 Stuttgart (DE)
(72) Erfinder: CAO, Chi-Thuan, 70825 Korntal-Münchingen (DE); HOFMANN, Dirk, 70439 Stuttgart (DE); VOLLERT, Herbert, 71665 Vaihingen/Enz (DE); NAGEL, Willi, 71686 Remseck/Hochdorf (DE); FOITZIK, Bertram, 74360 Ilsfeld (DE); GOETZELMANN, Bernd, 71063 Sindelfingen (DE)
(86) Internationale Anmeldenummer: PCT/EP2006/070201
(87) Internationale Veröffentlichungsnummer: WO 2007/077177

(56) Entgegenhaltungen:
- EP-A1- 0 544 186
- DE-A1- 19 805 211
- JP-A- 2001 130 402
- US-A1- 2003 019 708

## Beschreibung

### Stand der Technik

Die Erfindung betrifft einen schaltbaren Freilauf mit den Merkmalen des Oberbegriffs des Anspruchs 1. Der schaltbare Freilauf ist insbesondere für eine elektromechanische Fahrzeugbremse vorgesehen, um diese zu einer Feststellbremse, die vielfach auch als Parkbremse bezeichnet wird, weiter zu bilden. Die Erfindung betrifft auch eine elektromechanische Fahrzeugbremse mit so einem schaltbaren Freilauf.

Freiläufe sind an sich bekannt, sie werden auch als richtungsgeschaltete Kupplungen bezeichnet. Ein Freilauf weist eine Welle und einen Außenring auf, wobei die Welle auch als Hohlwelle oder Innenring ausgebildet sein kann. Zwischen der Welle und dem Außenring sind Sperrelemente angeordnet, die eine Drehung der Welle gegenüber dem Außenring in einer Richtung, der sog. Freilaufrichtung, zulassen und gegen eine Drehung der Welle gegenüber dem Außenring in umgekehrter Richtung, der sog. Sperrrichtung, sperren.

Bei einem schaltbaren Freilauf können die Sperrelemente in eine Ausschaltstellung gebracht werden, in der sie außer Funktion sind, d. h. in keiner Richtung gegen eine Drehung der Welle gegenüber dem Außenring sperren. In der Ausschaltstellung ist die Welle in beiden Richtungen gegenüber dem Außenring drehbar. In einer Einschaltstellung hat ein schaltbarer Freilauf die übliche Funktion eines Freilaufs, d. h. die Welle ist gegenüber dem Außenring in der Freilaufrichtung drehbar und gegen eine Drehung in der umgekehrten Sperrrichtung gesperrt.

Die Patentanmeldung EP 0 544 186 A1 offenbart einen schaltbaren Freilauf für eine Welle eines Hauptrotors eines Hubschraubers. Eine Antriebswelle weist in einer Umfangsrichtung ansteigende Rampen für Sperrelemente auf, die als rollenförmige Wälzkörper ausgebildet sind. Eine Abtriebswelle ist als Hohlwelle ausgebildet. Von der Welle steht an einer Stelle radial ein Federhalter ab, an dem sich eine Schraubendruckfeder als Rückstellfederelement abstützt, die in Umfangsrichtung gegen einen zweiten Federhalter drückt, der an einer Umfangsstelle radial von einem Sperrelementekäfig absteht. Der Sperrelementekäfig ist in einem Ringspalt zwischen der Welle und der Hohlwelle angeordnet und weist Taschen auf, in denen die Sperrelemente aufgenommen sind. Die Rückstellfeder beaufschlagt die Sperrelemente über den Sperrelementekäfig in eine Sperrstellung, d.h. das Rückstellfederelement beaufschlagt den Freilauf in die Einschaltstellung, in der er als Freilauf wirksam ist. Zum Ausschalten weist der bekannte Freilauf einen Elektromotor auf, dessen Stator feststehend an einem Gehäuse des Freilaufs angebracht ist. Ein Rotor des Elektromotors ist als drehfester Fortsatz des Sperrelementekäfigs ausgebildet. Durch Erzeugen eines rotierenden Magnetfeldes mit dem Stator kann der Rotor und mit diesem der Sperrelementekäfig in Drehung versetzt werden. Er verdreht den Sperrelementekäfig gegenüber der drehenden Welle des Freilaufs gegen die Kraft des Rückstellfederelements in der Ausschaltrichtung und dreht den Sperrelementekäfig synchron mit der Welle mit, damit der Freilauf in der Ausschaltstellung verbleibt.

Ebenfalls sind elektromechanische Fahrzeugbremsen als Radbremsen für Kraftfahrzeuge bekannt. Eine elektromechanische Fahrzeugbremse weist eine elektromechanische Betätigungseinrichtung auf, mit der ein Reibbremsbelag zum Bremsen an einen mit einem Fahrzeugrad drehfesten Bremskörper drückbar ist. Der Bremskörper ist üblicherweise eine Bremsscheibe oder eine Bremstrommel. Die Betätigungseinrichtung weist üblicherweise einen Elektromotor und ein Rotations-/Translations-Umsetzungsgetriebe auf, das eine drehende Antriebsbewegung des Elektromotors in eine translatorische Bewegung zum Drücken des Reibbremsbelags an den Bremskörper umsetzt. Als Rotations-/Transtations-Umsetzungsgetriebe werden vielfach Schraubgetriebe, beispielsweise Spindeltriebe oder Rollengewindetriebe verwendet. Auch ist die Umsetzung der Rotations- in eine Translationsbewegung beispielsweise mittels eines schwenkbaren Nockens möglich. Dem Elektromotor und dem Rotations-/Translations-Umsetzungsgetriebe ist vielfach ein Untersetzungsgetriebe, beispielsweise in Form eines Planetengetriebes, zwischengeschaltet. Es sind auch selbstverstärkende elektromechanische Fahrzeugbremsen bekannt, die eine Selbstverstärkungseinrichtung aufweisen, die eine vom drehenden Bremskörper auf den zum Bremsen gegen den Bremskörper gedrückten Reibbremsbelag ausgeübte Reibungskraft in eine Andruckkraft wandelt, die den Reibbremsbelag zusätzlich zu einer von der Betätigungseinrichtung aufgebrachten Andruckkraft an den Bremskörper drückt. Zur Selbstverstärkung sind Keil-, Rampen- und Hebelmechanismen bekannt.

### Erläuterung und Vorteile der Erfindung

Der erfindungsgemäße schaltbare Freilauf mit den Merkmalen des Anspruchs 1 weist einen Sperrelementekäfig auf, der durch Schwenken in Bezug auf den Außenring in eine Einschaltstellung die Sperrelemente in die Einschaltstellung und durch Schwenken in Bezug auf den Außenring in eine Ausschaltrichtung die Sperrelemente in die Ausschaltstellung bringt. Der Sperrelementekäfig, der vergleichbar einem Rollenkäfig eines Rollenlagers ausgebildet sein kann, bringt die Sperrelemente des erfindungsgemäßen Freilaufs gemeinsam in die Einschaltstellung oder die Ausschaltstellung. Er ist durch diese Funktion und nicht durch seine Ausbildung als "Käfig" definiert. Erfindungsgemäß sind der Sperrelementekäfig und der Außenring nach Art eines Elektromotors als Rotor und als Stator ausgebildet und weisen mindestens eine Spule auf. Es kann auch der Sperrelementekäfig den Stator und der Außenring den Rotor bilden. Durch Bestromen der mindestens einen Spule lässt sich der Sperrelementekäfig in Bezug auf den Außenring in die Einschaltstellung und/oder in die Ausschaltstellung schwenken und die Sperrelemente dadurch in die Einschaltstellung und/oder die Ausschaltstellung bringen, d. h. durch Bestromen der mindestens einen Spule wird der erfindungsgemäße Freilauf ein- oder ausgeschaltet. Schwenken bedeutet eine Drehung des Sperrelementekäfigs gegenüber dem Außenring um einen begrenzten Winkel. Ausser einer monostabilen Ausbildung, bei der der Freilauf stromlos aus- oder eingeschaltet bleibt ist auch eine bistabile Ausbildung denkbar, bei der der Freilauf stromlos sowohl in der eingeschalteten als auch in der ausgeschalteten Stellung bleibt und die mindestens eine Spule nur zum Umschalten von der Ein- in die Ausschaltstellung und umgekehrt bestromt werden muss. Weiterhin ist vorzugsweise vorgesehen, dass die mindestens eine Spule ein achssymmetrisches Magnetfeld erzeugt.

Der erfindungsgemäße Freilauf weist Rückstellfederelemente auf, die achssymmetrisch am Sperrelementekäfig angreifen.

Der erfindungsgemäße Freilauf hat den Vorteil, dass er rotationssymmetrisch ausgebildet werden kann. Auf den Freilauf einwirkende Kräfte bewirken dadurch kein Moment auf Teile des Freilaufs, die ein Schalten des Freilaufs zur Folge haben könnten. Solche Kräfte können Folge von auf den Freilauf wirkenden Beschleunigungen sein, die beispielsweise auf einen Freilauf einer elektromechanischen Radbremse eines Kraftfahrzeugs in Fahrt einwirken. Die Erfindung vermeidet ein unbeabsichtigtes Schalten des Freilaufs selbst bei hohen auf den Freilauf wirkenden Beschleunigungen. Des Weiteren wirkt ein Schaltmoment zum Ein- und/oder Ausschalten des Freilaufs jedenfalls bei rotationssymmetrischem Magnetfeld rotationssymmetrisch auf den Sperrelementekäfig oder den Außenring ein. Dadurch ist eine gleichmäßige Beaufschlagung aller Sperrelemente möglich, es tragen alle Sperrelemente in etwa gleich zum Sperren des Freilaufs in der Sperrrichtung bei. Ein zusätzlicher Vorteil der Erfindung ist, dass ein separater Aktuator zum Schwenken des Sperrelementekäfigs zum Ein- und/oder Ausschalten des Freilaufs nicht erforderlich ist, die Funktion der Betätigungseinrichtung ist durch die Ausbildung des Sperrelementekäfigs und des Außenrings nach Art eines Elektromotors in diese Teile integriert. Das spart Bauraum und ermöglicht eine kompakte Ausbildung des erfindungsgemäßen Freilaufs.

Die Unteransprüche haben vorteilhafte Ausgestaltungen und Weiterbildungen der im Anspruch 1 angegebenen Erfindung zum Gegenstand.

Gegenstand des Anspruchs 11 ist eine elektromechanische Fahrzeugbremse mit einem schaltbaren Freilauf der vorstehend erläuterten Art. Die Fahrzeugbremse ist dadurch zu einer Feststellbremse (Parkbremse) weitergebildet. Der Freilauf wirkt beispielsweise auf eine Motorwelle eines Elektromotors einer Betätigungseinrichtung der Fahrzeugbremse. Bei ausgeschalteten Freilauf ist die Motorwelle des Elektromotors in beiden Drehrichtungen frei drehbar, die Fahrzeugbremse lässt sich wie ohne Freilauf als Betriebsbremse verwenden. Zum Feststellen der Fahrzeugbremse wird sie betätigt und der Freilauf eingeschaltet, er sperrt gegen ein Rückdrehen der Betätigungseinrichtung und damit gegen ein Lösen der Fahrzeugbremse. Eine aufgebrachte Betätigungs- und Bremskraft der Fahrzeugbremse bleibt unverändert auch bei stromloser Fahrzeugbremse aufrecht erhalten. Da der eingeschaltete

Freilauf in der Freilaufrichtung drehbar ist, ist ein Betätigen, d. h. Zuspannen der Fahrzeugbremse, auch bei eingeschaltetem Freilauf möglich. Auf Grund einer mechanischen Verspannung der betätigten Fahrzeugbremse wird der eingeschaltete Freilauf in der Einschaltstellung gehalten, in der er gegen ein Lösen der Fahrzeugbremse sperrt. Durch die mechanische Verspannung der betätigten Fahrzeugbremse löst sich der Freilauf nicht selbsttätig, auch wenn er monostabil ausgeführt ist. Erst durch Lösen der mechanischen Verspannung der Fahrzeugbremse durch Bestromung in Betätigungsrichtung löst sich der Freilauf, so dass die Fahrzeugbremse anschließend lösbar ist. Au-βerdem ist die Einstellung eines Lüftspiels der Fahrzeugbremse und damit eine Verschleißnachstellung durch Einschalten des Freilaufs beim Lösen der Fahrzeugbremse möglich.

### Zeichnung

Die Erfindung wird nachfolgend anhand in der Zeichnung dargestellter Ausführungsbeispiele näher erläutert. Es zeigen: .
- Figur 1: einen erfindungsgemäßen Freilauf in perspektivischer Darstellung;
- Figur 2: einen Querschnitt des Freilaufs aus Figur 1;
- Figur 3: eine Einzelheit-Darstellung gemäß Pfeil III in Figur 2;
- Figur 4: einen Achsschnitt einer abgewandelten Ausführungsform eines erfindungsgemäßen Freilaufs; und
- Figur 5: eine Schemadarstellung einer erfindungsgemäßen elektromechanischen Fahrzeugbremse.

### Beschreibung der Ausführungsbeispiele

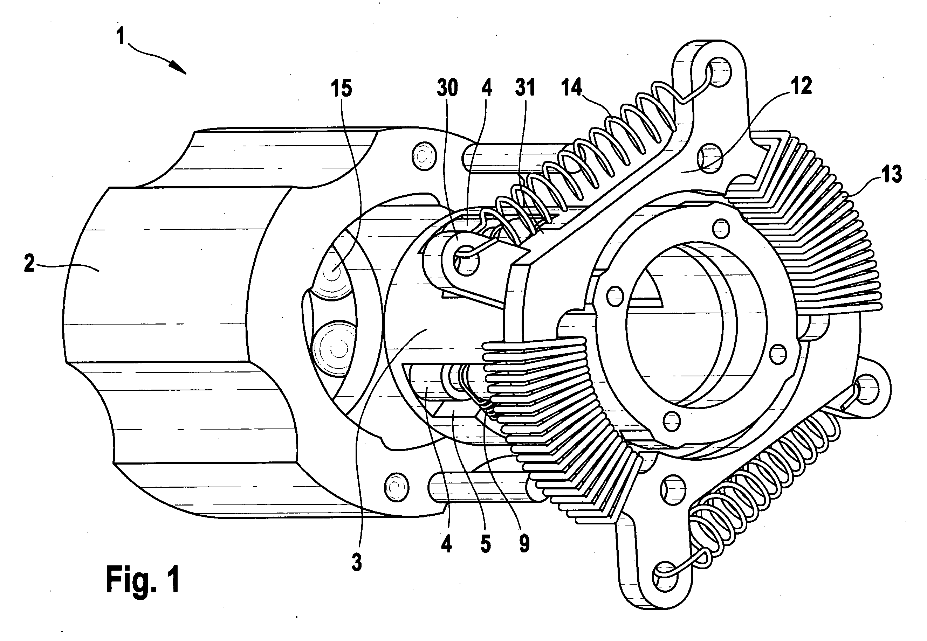

Der in Figur 1 dargestellte erfindungsgemäße Freilauf 1 weist einen rohrförmigen Außenring 2 und einen koaxial in ihm angeordneten Sperrelementekäfig 3 auf. Der klaren Darstellung wegen nicht gezeichnet ist eine Welle, die koaxial im Sperrelementekäfig 3 angeordnet ist. Der Sperrelementekäfig 3 ist rohrförmig und weist achsparallele, im Wesentlichen rechteckige Durchbrechungen auf, die als Taschen 5 bezeichnet werden und in denen zylinderförmige Wälzkörper aufgenommen sind, die Sperrelemente 4 des Freilaufs 1 bilden.

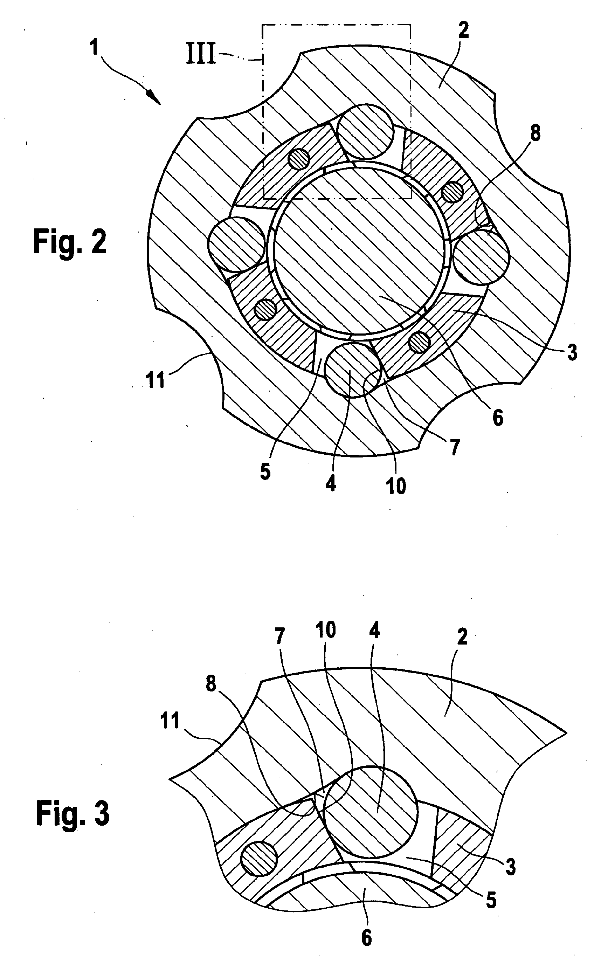

Wie im Querschnitt von Figur 2 zu sehen, sind die in Figur 1 nicht dargestellte Welle 6 des Freilaufs 1, der Sperrelementekäfig 3 und der Außenring 2 konzentrisch zueinander angeordnet, der Sperrelementekäfig 3 und die Sperrelemente 4 befinden sich in einem ringförmigen Zwischenraum zwischen dem Außenring 2 und der Welle 6. Am Innenumfang weist der Außenring 2 Vertiefungen auf, die ebenfalls als Taschen 7 bezeichnet werden. Die Sperrelemente 4 wälzen auf Grundflächen 8 der Taschen 7. In Umfangsrichtung verlaufen die Grundflächen 8 spiralförmig in einem Keilwinkel zur Umfangsrichtung. Ein Abstand von den Grundflächen 8 der Taschen 7 des Außenrings 2 zur Oberfläche der Welle 6 verkleinert sich dadurch in einer nachfolgend auch als Sperrrichtung bezeichneten Umfangsrichtung.

Zum Einschalten des Freilaufs 1 wird der Sperrelementekäfig 3 um seine gedachte Achse in der Sperrrichtung, in der Zeichnung entgegen dem Uhrzeigersinn, geschwenkt, d. h. so weit gedreht, bis die Sperrelemente 4 in Anlage an die Welle 6 gelangen. Er bewegt die Sperrelemente 4 in Umfangsrichtung, die Sperrelemente 4 wälzen auf den Grundflächen 8 der Taschen 7 des Außenrings 2 des Freilaufs 1. Da die Grundflächen 8 sich in der Sperrrichtung spiralförmig der Welle 6 nähern, gelangen die Sperrelemente 4 in Kontakt mit der Welle 6 und werden gegen diese gedrückt. Der Sperrelementekäfig 3 und die Sperrelemente 4 sind in eine nicht dargestellte Einschaltstellung bewegt, der Freilauf 1 ist eingeschaltet. Eine Drehung der Welle 6 in der Sperrrichtung beaufschlagt die gegen sie gedrückten Sperrelemente 4 in der Sperrrichtung, d. h. in Richtung des enger werdenden Keilspalts zwischen den Grundflächen 8 der Taschen 7 des Außenrings 2 und der Welle 6. Die Sperrelemente 4 sperren die Welle 6 kraftschlüssig gegen eine Drehung in der Sperrrichtung. Bei umgekehrter Drehrichtung der Welle 6, der sog. Freilaufrichtung, beaufschlagt die Welle 6 die gegen sie gedrückten Sperrelemente 4 in Richtung des größer werdenden Keilspalts zwischen den Grundflächen 8 der Taschen 7 des Außenrings 2 und der Welle 6. In dieser Drehrichtung ist die Welle 6 bei eingeschaltetem Freilauf 1 drehbar.

Zum Ausschalten des Freilaufs 1 wird der Sperrelementekäfig 3 in der Freilaufrichtung um seine gedachte Achse in die in Figur 2 dargestellte Ausschaltstellung geschwenkt. Er bewegt die Sperrelemente 4 in Umfangsrichtung, und zwar in der Freilaufrichtung, bis an die Enden der Taschen 7. Hier ist der Abstand der Grundflächen 8 der Taschen 7 des Außenrings 2 von der Welle 6 größer als ein Durchmesser der zylinderförmigen, als Wälzkörper ausgebildeten Sperrelemente 4, die Sperrelemente 4 sind außer Funktion und die Welle 6 ist in beiden Drehrichtungen frei drehbar.

Der Sperrelementekäfig 3 ist dreh- oder schwenkbar im Außenring 2 gelagert. Die Lagerung ist eine Gleitlagerung des rohrförmigen Sperrelementekäfigs 3 im Außenring 2. Es sind andere Lagerungen möglich. Die Drehlagerung zentriert den Sperrelementekäfig 3 im Außenring 2, so dass über den gesamten Umfang ein gleichmäßiger Spalt zwischen dem Sperrelementekäfig 3 und der Welle 6 besteht und der Sperrelementekäfig 3 nicht an der Welle 6 streift. Eine Drehmomentenübertragung von der Welle 6 auf den Sperrelementekäfig 3 und ein ungewolltes Ein- oder Ausschalten des Freilaufs 1 wird dadurch vermieden.

Federelemente 9, die am Sperrelementekäfig 3 eingehängt sind und an den Sperrelementen 4 angreifen, beaufschlagen die Sperrelemente 4 in der Sperrrichtung und in Anlage an einen Rand 10 der Taschen 5 des Sperrelementekäfigs 3, der aus Sicht der Sperrelemente 4 in der Sperrrichtung gelegen ist. Dieser Rand 10 ist erfindungsgemäß schräg nach außen gerichtet, so dass er die Sperrelemente 4 nach außen gegen die Grundflächen 8 der Taschen 7 des Außenrings 2 beaufschlagt. In der in Figur 2 dargestellten Ausschaltstellung sind die Sperrelemente 4 dadurch von der Welle 6 abgehoben. Die Ränder 10 der Taschen 5 des Sperrelementekäfigs 3 können auch als Anlageflächen für die Sperrelemente 4 bezeichnet werden. Die Sperrelemente 4 berühren die Welle 6 nur bei eingeschaltetem Freilauf 1, bei ausgeschaltetem Freilauf 1 besteht ein Spalt zwischen den Sperrelementen 4 und der Welle 6.

Die in Figur 3 gezeigte Vergrößerung im Bereich einer der Taschen 7 des Außenrings 2 zeigt, dass der Grund 8 der Taschen 7 nicht mit konstantem Keilwinkel zur Umfangsrichtung verläuft, sondern der Keilwinkel ist an dem in Freilaufrichtung, d. h. in Figur 3 rechts gelegenen Ende der Taschen 7 größer und wird in Sperrrichtung stetig oder in Stufen spitzer. Der zunächst größere Keilwinkel der Grundflächen 8 der Taschen 7 bewirkt ein höheres Abheben der Sperrelemente 4 von der Welle 6 beim Ausschalten des Freilaufs 1 bei einem vorgegebenen Schwenkwinkel des Sperrelementekäfigs 3. Bei ausgeschaltetem Freilauf 1 ist der Spalt zwischen den Sperrelementen 4 und der Welle 6 größer. Außerdem ermöglicht der zunächst größere Keilwinkel ein Einschalten des Freilaufs 1 mit kleinerem Schwenkwinkel des Sperrelementekäfigs 3 und damit eine Verkürzung der Schaltzeit.

Der spitze Keilwinkel in einem in Sperrrichtung gelegenen Endbereich der Grundflächen 8 der Taschen 7 des Außenrings 2 führt zu einer hohen Klemmkraft und damit zu einer guten Sperrwirkung. Der Keilwinkel ist im genannten Endbereich der Grundflächen 8 so spitz gewählt, dass Selbsthemmung eintritt. Wird der Sperrelementekäfig 3 so weit in Sperrrichtung geschwenkt, dass sich die Sperrelemente 4 in den in Sperrrichtung gelegenen Endbereichen der Grundflächen 8 der Taschen 7 mit dem spitzen Keilwinkel befinden, verbleiben sie und der Sperrelementekäfig 3 auf Grund der Selbsthemmung von selbst in der Sperrstellung, d. h. der Freilauf 1 löst sich in diesem Fall nicht aus seiner eingeschalteten Stellung. Zum Lösen muss entweder der Sperrelementekäfig 3 oder die Welle 6 in der Freilaufrichtung geschwenkt werden. Um die Selbsthemmungswirkung zu verbessern, ist eine Außenseite des Außenrings 2 an den in Sperrrichtung gelegenen Endbereichen der Grundflächen 8 der Taschen 7 mit Aussparungen 11 versehen. Eine Wanddicke des Außenrings 2 ist in den genannten Bereichen geschwächt, der Außenring 2 ist in den genannten Bereichen in radialer Richtung elastisch und federnd. Durch die Elastizität des Außenrings 2 in den genannten Endbereichen der Grundflächen 8 der Taschen 7 werden die Sperrelemente 4 federnd gegen die Welle 6 gedrückt. Einem unbeabsichtigten Lösen, beispielsweise durch eine Schwenkbewegung der Welle 6 mit einem kleinen Schwenkwinkel in Bezug auf den Außenring 2 oder durch Vibrationen, wird entgegen gewirkt, ein Verbleiben des Freilaufs 1 in der selbsthemmenden, sperrenden Einschaltstellung wird verbessert. Die gewünschte Elastizität des Außenrings 2 in radialer Richtung im Bereich der Taschen 7 lässt sich auch in anderer Weise erreichen. Beispielsweise kann ein in Figuren 1 bis 3 nicht dargestelltes Gehäuse, in das der Außenring 2 eingepresst ist, in den genannten Bereichen Aussparungen auf der Innenseite aufweisen. Dadurch fehlt eine Abstützung des Außenrings 2 von außen in den genannten Bereichen und es werden Freiräume geschaffen, in die der Außenring 2 radial nach außen federn kann.

In einem mittleren Bereich zwischen den Endbereichen mit dem großen Keilwinkel und mit dem spitzen, die Selbsthemmung der Sperrelemente 4 und des Freilaufs 1 bewirkenden Keilwinkel weist die Grundfläche 8 der Taschen 7 des Außenrings 2 einen Keilwinkel auf, der so spitz ist, dass Selbsthemmung auftritt, d.h. dass bei eingeschaltetem Freilauf 1 ein zuverlässiges Sperren gegen eine Drehung der Welle 6 in der Sperrrichtung unter allen Betriebsbedingungen sichergestellt ist. Allerdings ist der Keilwinkel im genannten mittleren Bereich der Grundfläche 8 der Taschen 7 größer, d. h. stumpfer, als im Endbereich, so dass der Freilauf 1 nicht in der eingeschalteten Stellung bei in Sperrrichtung gedrehter Welle 6 klemmt.

Der Sperrelementekäfig 3 steht auf einer Seite aus dem Außenring 2 vor, er befindet sich in diesem Bereich in einem mit dem Außenring 2 starr verbundenen Stator 12 (Figur 1). Der Stator 12 weist zwei einander gegenüber, d. h. rotationssymmetrisch angeordnete Spulen 13 auf. Der Sperrelementekäfig 3 bildet einen Rotor. Der Außenring 2 mit seinem Stator 12 und Sperrelementekäfig 3 sind dadurch nach Art eines Elektromotors als Rotor und als Stator ausgebildet. Durch Bestromen der Spulen 13 wird ein rotationssymmetrisches Magnetfeld erzeugt, das ein Drehmoment auf den Sperrelementekäfig 3 in der Sperrrichtung ausübt. Der Freilauf 1 lässt sich somit durch Bestromen der Spulen 13 einschalten. Das am Sperrelementekäfig 3 angreifende Moment ist rotationssymmetrisch, der Sperrelementekäfig 3 wird nicht quer zur Welle 6 beaufschlagt.

Zur Rückstellung, d. h. zum Ausschalten des Freilaufs 1 sind zwei tangential angeordnete Federelemente 14 vorgesehen, die am Stator 12 und an dem den Rotor bildenden Sperrelementekäfig 3 angreifen. Die Rückstellfederelemente 14 sind symmetrisch angeordnet und beaufschlagen den Sperrelementekäfig 3 ebenfalls ausschließlich rotationssymmetrisch, d. h. ohne resultierende Querkraft. Im dargestellten Ausführungsbeispiel der Erfindung sind die Rückstellfederelemente 14 als Schraubenzugfedern ausgeführt.

Insgesamt weist der Freilauf 1 einen rotationssymmetrischen Aufbau ohne Exzentrizitäten auf. Querkräfte durch Beschleunigungen und Erschütterungen des Freilaufs 1 bewirken deswegen keine Momente auf Teile des Freilaufs 1, die diesen in Ein- oder Ausschaltrichtung beaufschlagen. Ein unbeabsichtigtes Schalten des Freilaufs 1 wird dadurch vermieden.

Im dargestellten Ausführungsbeispiel ist der Sperrelementekäfig 3 einstückig mit dem Rotor, er selbst bildet den Rotor. Erfindungsgemäß ist es auch möglich, den Rotor starr mit dem Sperrelementekäfig 3 zu verbinden, beispielsweise mit einer Stift-, Niet- und/oder Schraubverbindung (nicht dargestellt). Der Sperrelementekäfig 3 lässt sich dadurch aus einem magnetisch nicht leitenden Material herstellen, um Magnetwirkungen beim Bestromen der Spulen 13 auf die Sperrelemente 4 zu vermeiden.

Auf der dem Stator 12 abgewandten Seite steht der Außenring 2 über den Sperrelementekäfig 3 über. Er weist dort ein Wellenlager 15 für die in Figur 1 nicht dargestellte Welle 6 des Freilaufs 1 auf. Im dargestellten Ausführungsbeispiel der Erfindung ist als Wellenlager 15 ein Kugellager gewählt worden. Es können auch andere Wälz- oder ein Gleitlager als Wellenlager 15 verwendet werden (nicht dargestellt). Die Welle 6 ist dadurch axial sehr nah am Freilauf 1, d. h. den Sperrelementen 4, drehbar gelagert und radial abgestützt. Dadurch wird eine gute Koaxialität der Welle 6 im Außenring 2 erreicht, die wichtig für die Funktion des Freilaufs 1 ist. Vorzugsweise ist die in Figur 1 nicht dargestellte Welle 6 beiderseits der Sperrelemente 4 und nahe an den Sperrelementen 6 drehbar gelagert und radial abgestützt, um eine gute Koaxialität der Welle 6 im Außenring 2 auch bei Belastung der Welle 6 sicherzustellen. Dadurch wird eine gleichmäßig auf alle Sperrelemente 4 verteilte Sperrwirkung erzielt, die für eine einwandfreie Funktion des Freilaufs 1 wichtig ist.

Der Sperrelementekäfig 3 weist eine Schwenkwinkelbegrenzung auf. Diese wird im Ausführungsbeispiel durch vom Sperrelementekäfig 3 radial nach außen abstehende Laschen 30 gebildet an denen die Federelemente 14 zum Rückstellen des Sperrelementekäfigs 3 und zum Ausschalten des Freilaufs 1 eingehängt sind. Die Laschen 30 wirken mit Anschlägen 31 am Stator 12 zusammen, die den Schwenkwinkel des Sperrelementekäfigs 3 in beiden Richtungen begrenzen.

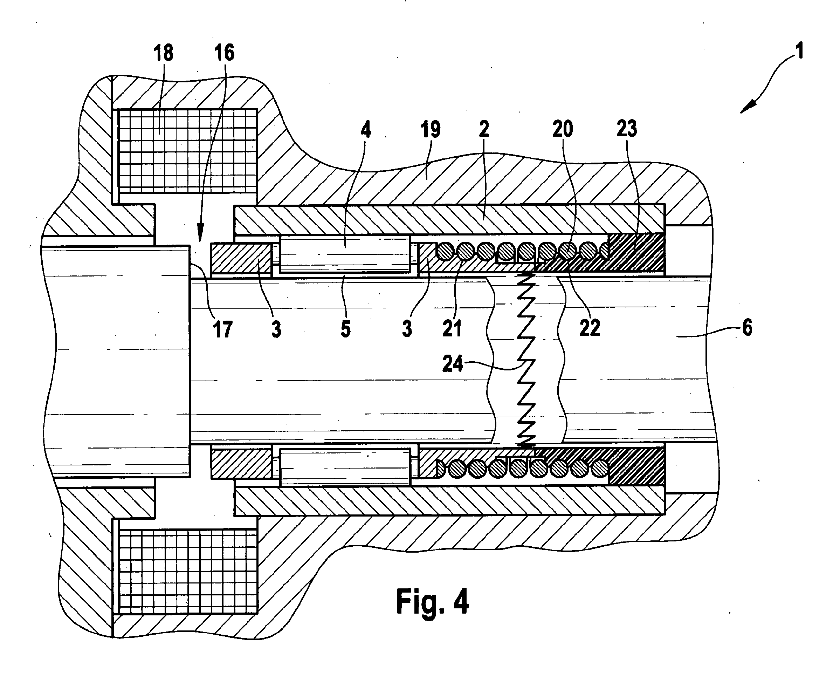

Bei der in Figur 4 dargestellten Ausgestaltung der Erfindung weist der Freilauf 1 eine schaltbare Reibungskupplung 16 auf. Die Reibungskupplung 16 ist durch den Sperrelementekäfig 3 und eine Ringschulter 17 an einer Durchmesserstufung der Welle 6 gebildet, gegen die der Sperrelementekäfig 3 beim Einrücken der Reibungskupplung 16 in axialer Richtung und mit seiner Stirnseite gedrückt wird. Bei eingerückter Reibungskupplung 16 beaufschlagt die Welle 6, wenn sie sich dreht, den Sperrelementekäfig 3 mit einem Drehmoment. Abhängig von der Drehrichtung der Welle 6 lässt sich der Freilauf 1 dadurch ein- und ausschalten.

Das Einrücken der schaltbaren Reibungskupplung 16 erfolgt magnetisch durch Bestromen einer Spule 18, die in ein Gehäuse 19 eingesetzt ist, in das der Außenring 2 des Freilaufs 1 eingepresst ist. Das Gehäuse 19 kann Bestandteil eines Gehäuses einer in Figur 4 nicht dargestellten elektromechanischen Reibungsbremse sein. Das Bestromen der Spule 18 bewirkt ein Magnetfeld, welches den Sperrelementekäfig 3 axial gegen die Ringschulter 17 der Welle 6 zieht und die Reibungskupplung 16 dadurch einrückt. Ein Magnetkreis wird durch das Gehäuse 19, den Außenring 2, den Sperrelementekäfig 3 und die Welle 6 geschlossen. Der Sperrelementekäfig 3 kann auch als Anker und die Ringschulter 17 der Welle 6 als Polstück eines außerdem die Spule 18 umfassenden Elektromagneten zum Einrücken und Schalten der Reibungskupplung 16 aufgefasst werden. Die schaltbare Reibungskupplung 16 hat den Vorteil, dass der Freilauf 1 stufenlos in jeder Winkelstellung einschaltbar ist.

Zum Ausrücken weist die Reibungskupplung 16 ein Federelement 20 auf, das im dargestellten Ausführungsbeispiel der Erfindung als Schraubenzugfeder ausgebildet ist. Das Federelement 20 ist mit einem Ende auf eine schraubenlinienförmige Nut 21 des Sperrelementekäfigs 3 und mit dem anderen Ende auf eine schraubenlinienförmige Nut 22 eines Rückstellelements 23 geschraubt. Das Rückstellelement 23 ist rohrförmig und es ist koaxial zum Außenring 2 und zur Welle 6 angeordnet. Das Rückstellelement 23 ist in den Außenring 2 eingepresst und dadurch axial und drehfest gehalten. Nach Ausschalten der Bestromung der Spule 18 zieht das Federelement 20 durch seine Federkraft den Sperrelementekäfig 3 axial von der Ringschulter 17 der Welle 6 weg und rückt die Reibungskupplung 16 aus. Da der Sperrelementekäfig 3 beim Einrücken der Reibungskupplung 16 und Einschalten des Freilaufs 1 durch Drehung der Welle 6 in Drehrichtung der Welle 6 geschwenkt wird, wird das Federelement 20 elastisch verdreht. Beim Ausschalten der Spule 18 übt das zuvor elastisch verdrehte Federelement 20 ein Rückstellmoment auf den Sperrelementekäfig 3 in Freilaufrichtung aus, das das Ausschalten des Freilaufs 1 unterstützt. Des Weiteren weisen einander zugewandte Stirnseiten des Sperrelementekäfigs 3 und des Rückstellelements 23 komplementäre, sägezahnförmige Verzahnungen 24 auf, deren Richtung so gewählt ist, dass sie ebenfalls ein Rückstellmoment in Freilaufrichtung und damit in Ausschaltrichtung des Freilaufs 1 bewirken, wenn der Sperrelementekäfig 3 von Federelement 20 gegen das Rückstellelement 23 gezogen wird.

Im Übrigen ist der in Figur 4 dargestellte Freilauf 1 gleich ausgebildet wie der in Figuren 1 bis 3 dargestellte und oben erläuterte Freilauf 1 und funktioniert in gleicher Weise. Zur Vermeidung von Wiederholungen wird insoweit Bezug auf die oben stehenden Ausführungen zu Figuren 1 bis 3 verwiesen. Für gleiche Bauteile werden gleiche Bezugszahlen verwendet.

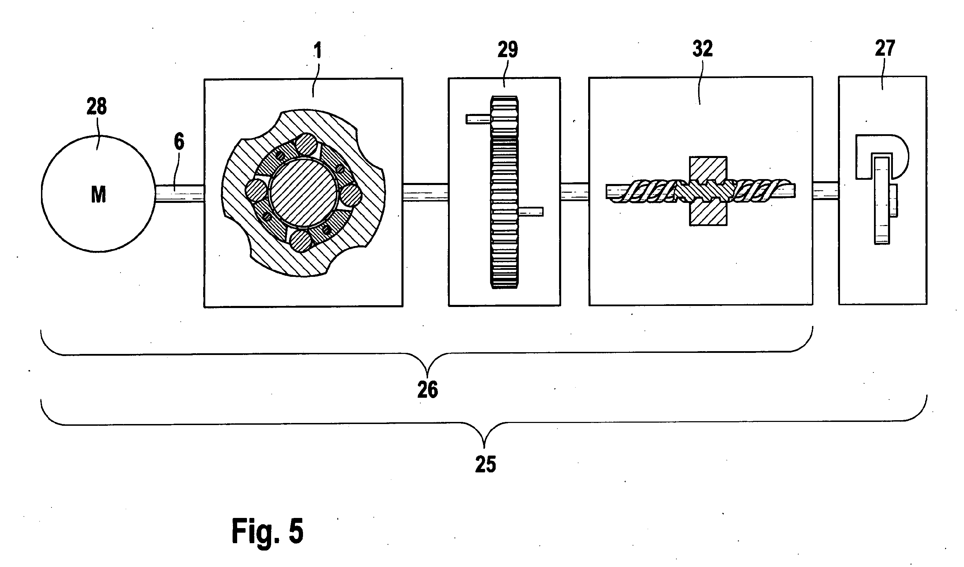

Die in Figur 5 als mechanischer Schaltplan dargestellte, erfindungsgemäße elektromechanische Fahrzeugbremse 25 ist als Radbremse für einen Kraftwagen vorgesehen. Sie weist eine elektromechanische Betätigungseinrichtung 26 auf, mit der ein nicht einzeln dargestellter Reibbremsbelag zum Bremsen an einen Bremskörper, beispielsweise eine Bremsscheibe 27 drückbar ist. Derartige Fahrzeugbremsen sind in unterschiedlichen Konstruktionen an sich bekannt und sollen deswegen an dieser Stelle nicht näher erläutert werden. Die Betätigungseinrichtung 26 weist einen Elektromotor 28 auf, mit dem über ein Untersetzungsgetriebe 29 ein Rotations-/Translations-Umsetzungsgetriebe 30, beispielsweise in Form eines Gewindetriebs, antreibbar ist. Das Rotations-/Translations-Umsetzungsgetriebe 29 setzt eine drehende Antriebsbewegung des Elektromotors 28 in eine Translationsbewegung zum Drücken des Reibbremsbelags an die Bremsscheibe 27 um. Soweit bis hierher beschrieben, ist die elektromechanische Fahrzeugbremse 25 eine Betriebsbremse.

Auf einer Motorwelle des Elektromotors 27 ist der oben beschriebene schaltbare Freilauf 1 angeordnet. Die Motorwelle ist also die Freilaufwelle 6 oder die beiden Wellen sind drehfest miteinander verbunden. Der Freilauf 1 kann auch an anderer Stelle auf die Betätigungseinrichtung 26 der Fahrzeugbremse 25 einwirken, er kann beispielsweise an/auf einer Getriebewelle des Untersetzungsgetriebes 29 angeordnet sein (nicht dargestellt). Die Freilaufrichtung des Freilaufs 1 ist in Betätigungsrichtung der Fahrzeugbremse 25 und die Sperrrichtung des Freilaufs 1 in Löserichtung der Fahrzeugbremse 25 gewählt. In der Ausschaltstellung des Freilaufs 1 bildet die Fahrzeugbremse 25 eine betätig- und lösbare Betriebsbremse. Nach Einschalten des Freilaufs 1 kann die Fahrzeugbremse 25 nur betätigt, d. h. zugespannt, jedoch nicht gelöst werden. Eine einmal aufgebrachte Bremskraft bleibt erhalten. Die Fahrzeugbremse 25 bildet in diesem Fall eine Feststellbremse (Parkbremse). Da die betätigte Fahrzeugbremse 25 die Motorwelle des Elektromotors 28 durch mechanische Spannung in Löserichtung der Fahrzeugbremse 25 und damit in Sperrrichtung des Freilaufs 1 beaufschlagt, bleibt der Freilauf 1 wie weiter oben beschrieben auch dann eingeschaltet und gesperrt, wenn er unbestromt ist. Die einmal aufgebaute Feststellbremskraft bleibt dadurch bei energieloser Fahrzeugbremse 25 aufrecht erhalten. Darüber hinaus kann der Sperrelementekäfig 3 zum Feststellen der betätigten Fahrzeugbremse 25 so stark in der Sperrrichtung geschwenkt werden, dass die oben beschriebene Selbsthemmung eintritt, die den Freilauf 1 in der eingeschalteten Sperrstellung hält. Zum Lösen muss die mechanische Spannung der Motorwelle durch Bestromen des Elektromotors 28 in Betätigungsrichtung abgebaut werden, wodurch der Freilauf 1 ausgeschaltet wird.

## Patentansprüche

1. Schaltbarer Freilauf, mit einer Welle (6) und einem Außenring (2), die bei ausgeschaltetem Freilauf (1) gegeneinander drehbar und die bei eingeschaltetem Freilauf (1) in einer Drehrichtung, der Freilaufrichtung, gegeneinander drehbar und gegen ein gegeneinander Drehen in umgekehrter Drehrichtung, der Sperrrichtung, gesperrt sind, mit Sperrelementen (4), die zwischen der Welle (6) und dem Außenring (2) angeordnet sind und die in eine Einschaltstellung, in der die Sperrelemente (4) die Welle (6) und den Außenring (2) gegen ein gegeneinander Drehen in der Sperrrichtung sperren, und in eine Ausschaltstellung, in der die Sperrelemente (4) außer Funktion sind, bringbar sind, mit einem Sperrelementekäfig (3), der durch Schwenken in Bezug auf den Außenring (2) in eine Einschaltstellung die Sperrelemente (4) in die Einschaltstellung und durch Schwenken in Bezug auf den Außenring (2) in eine Ausschaltstellung die Sperrelemente (4) in die Ausschaltstellung bringt, wobei der Sperrelementekäfig (3) und der Außenring (2) nach Art eines Elektromotors als Rotor und als Stator ausgebildet sind und mindestens eine Spule (13) aufweisen, und mit einem Rückstellfederelement (14) für den Sperrelementekäfig (3), **dadurch gekennzeichnet, dass** durch Bestromen der Spule (13) der Sperrelementekäfig (3) in Bezug auf den Außenring (2) in die Ein- und/oder Ausschaltstellung schwenkbar ist und dass der Freilauf (1) Rückstellfederelemente (14) für den Sperrelementekäfig (3) aufweist, die achssymmetrisch angreifen.

2. Schaltbarer Freilauf nach Anspruch 1, **dadurch gekennzeichnet, dass** der Außenring (2) des Freilaufs (1) ein Wellenlager (15) für die Welle (6) des Freilaufs (1) aufweist.

3. Schaltbarer Freilauf nach Anspruch 1, **dadurch gekennzeichnet, dass** der Sperrelementekäfig (3) eine Zentrierung aufweist.

4. Schaltbarer Freilauf nach Anspruch 1, **dadurch gekennzeichnet, dass** der Sperrelementekäfig (3) schräg zum Außenring (2) gerichtete Anlageflächen (10) für die Sperrelemente (4) aufweist, die in der Ausschaltstellung die Sperrelemente (4) zum Außenring (2) hin beaufschlagen.

5. Schaltbarer Freilauf nach Anspruch 1, **dadurch gekennzeichnet, dass** der Freilauf (1) eine Schwenkwinkelbegrenzung aufweist, die einen Schwenkwinkel des Sperrelementekäfigs (3) in Bezug auf den Außenring (2) begrenzt.

6. Schaltbarer Freilauf nach Anspruch 1, **dadurch gekennzeichnet, dass** der Freilauf (1) kraftschlüssig wirkt und Wälzkörper als Sperrelemente (4) aufweist, die in sich in einer Umfangsrichtung verjüngenden Keilspalten zwischen dem Außenring (2) und der Welle (6) angeordnet sind, und dass ein Keilwinkel der Keilspalte in Sperrrichtung spitzer wird.

7. Schaltbarer Freilauf nach Anspruch 6, **dadurch gekennzeichnet, dass** der Keilwinkel der Keilspalte so spitz wird, dass der Freilauf (1) selbsthemmend in der sperrenden Einschaltstellung verbleibt.

8. Schaltbarer Freilauf nach Anspruch 7, **dadurch gekennzeichnet, dass** der Außenring (2) in selbsthemmenden Bereichen der Keilspalte radial elastisch ist.

9. Schaltbarer Freilauf nach Anspruch 1, **dadurch gekennzeichnet, dass** der Freilauf (1) eine schaltbare Reibungskupplung (16) aufweist, durch die der Sperrelementekäfig (3) reibschlüssig mit der Welle (6) verbindbar ist.

10. Schaltbarer Freilauf nach Anspruch 9, **dadurch gekennzeichnet, dass** die Reibungskupplung (16) ein Rückstellelement (23) aufweist, das beim Ausrücken der Reibungskupplung (16) ein Moment in Richtung der Ausschaltstellung auf den Sperrelementekäfig (3) ausübt.

11. Elektromechanische Fahrzeugbremse, **dadurch gekennzeichnet, dass** die Fahrzeugbremse (24) einen schaltbaren Freilauf nach einem der vorstehenden Ansprüche aufweist (1).

## Claims

1. Switchable freewheel, having a shaft (6) and having an outer ring (2) which are rotatable relative to one another when the freewheel (1) is deactivated and which are rotatable relative to one another in one rotational direction, the freewheeling direction, and are blocked against rotation relative to one another in the opposite rotational direction, the blocking direction, when the freewheel (1) is activated, having blocking elements (4) which are arranged between the shaft (6) and the outer ring (2) and which can be placed into an activation position, in which the blocking elements (4) block a rotation of the shaft (6) and the outer ring (2) relative to one another in the blocking direction, and into a deactivation position, in which the blocking elements (4) are without function, having a blocking element cage (3) which, by pivoting relative to the outer ring (2) into an activation position, places the blocking elements (4) into the activation position, and by pivoting relative to the outer ring (2) into a deactivation position, places the blocking elements (4) into the deactivation position, wherein the blocking element cage (3) and the outer ring (2), in the manner of an electric motor, are formed as a rotor and as a stator and have at least one coil (13), and having a restoring spring element (14) for the blocking element cage (3), **characterized in that**, by energization of the coil (13), the blocking element cage (3) can be pivoted relative to the outer ring (2) into the activation and/or deactivation position, and **in that** the freewheel (1) has restoring spring elements (14) for the blocking element cage (3) which engage thereon axially symmetrically.

2. Switchable freewheel according to Claim 1, **characterized in that** the outer ring (2) of the freewheel (1) has a shaft bearing (15) for the shaft (6) of the freewheel (1).

3. Switchable freewheel according to Claim 1, **characterized in that** the blocking element cage (3) has a centring means.

4. Switchable freewheel according to Claim 1, **characterized in that** the blocking element cage (3) has abutment surfaces (10), which are oriented obliquely with respect to the outer ring (2), for the blocking elements (4), which abutment surfaces, in the deactivation position, exert load on the blocking elements (4) in the direction of the outer ring (2).

5. Switchable freewheel according to Claim 1, **characterized in that** the freewheel (1) has a pivot angle limiting means which limits a pivot angle of the blocking element cage (3) relative to the outer ring (2).

6. Switchable freewheel according to Claim 1, **characterized in that** the freewheel (1) has a non-positive action and has, as blocking elements (4), rolling bodies which are arranged in wedge gaps, which narrow in one circumferential direction, between the outer ring (2) and the shaft (6), and **in that** a wedge angle of the wedge gaps becomes more acute in the blocking direction.

7. Switchable freewheel according to Claim 6, **characterized in that** the wedge angle of the wedge gaps becomes so acute that the freewheel (1) remains in the blocking activation position in a self-locking manner.

8. Switchable freewheel according to Claim 7, **characterized in that** the outer ring (2) is radially elastic in self-locking regions of the wedge gaps.

9. Switchable freewheel according to Claim 1, **characterized in that** the freewheel (1) has a switchable friction clutch (16) by means of which the blocking element cage (3) can be connected in frictionally engaging fashion to the shaft (6).

10. Switchable freewheel according to Claim 9, **characterized in that** the friction clutch (16) has a restoring element (23) which, when the friction clutch (16) is disengaged, exerts a torque on the blocking element cage (3) in the direction of the deactivation position.

11. Electromechanical vehicle brake, **characterized in that** the vehicle brake (24) has a switchable freewheel (1) according to one of the preceding claims.

## Revendications

1. Roue libre commutable, comprenant un arbre (6) et une bague extérieure (2) qui peuvent tourner l'un par rapport à l'autre lorsque la roue libre (1) est désengagée et qui peuvent tourner l'un par rapport à l'autre dans un sens de rotation, le sens de roue libre, lorsque la roue libre (1) est engagée, et qui sont bloqués contre toute rotation l'un par rapport à l'autre dans le sens de rotation inverse, le sens de blocage, comprenant des éléments de blocage (4) qui sont disposés entre l'arbre (6) et la bague extérieure (2) et qui peuvent être amenés dans une position d'engagement dans laquelle les éléments de blocage (4) bloquent l'arbre (6) et la bague extérieure (2) contre une rotation l'un par rapport à l'autre dans le sens de blocage, et dans une position de désengagement dans laquelle les éléments de blocage (4) ne fonctionnent pas, comprenant une cage à éléments de blocage (3) qui, par pivotement par rapport à la bague extérieure (2) dans une position d'engagement, amène les éléments de blocage (4) dans la position d'engagement et par pivotement par rapport à la bague extérieure (2) dans une position de désengagement amène les éléments de blocage (4) dans la position de désengagement, la cage à éléments de blocage (3) et la bague extérieure (2) étant réalisées à la manière d'un moteur électrique en tant que rotor et stator et présentant au moins une bobine (13), et comprenant un élément de ressort de rappel (14) pour la cage à éléments de blocage (3), **caractérisée en ce que** par alimentation électrique de la bobine (13), la cage à éléments de blocage (3) peut pivoter par rapport à la bague extérieure (2) dans la position d'engagement et/ou de désengagement et **en ce que** la roue libre (1) présente des éléments de ressort de rappel (14) pour la cage à éléments de blocage (3), lesquels viennent en prise de manière symétrique par rapport à l'axe.

2. Roue libre commutable selon la revendication 1, **caractérisée en ce que** la bague extérieure (2) de la roue libre (1) présente un palier d'arbres (15) pour l'arbre (6) de la roue libre (1).

3. Roue libre commutable selon la revendication 1, **caractérisé en ce que** la cage à éléments de blocage (3) présente un centrage.

4. Roue libre commutable selon la revendication 1, **caractérisée en ce que** la cage à éléments de blocage (3) présente des surfaces d'appui (10) orientées obliquement par rapport à la bague extérieure (2) pour les éléments de blocage (4), qui, dans la position de désengagement, sollicitent les éléments de blocage (4) par rapport à la bague extérieure (2).

5. Roue libre commutable selon la revendication 1, **caractérisée en ce que** la roue libre (1) présente une limitation d'angle de pivotement qui limite un angle de pivotement de la cage à éléments de blocage (3) par rapport à la bague extérieure (2).

6. Roue libre commutable selon la revendication 1, **caractérisée en ce que** la roue libre (1) agit par engagement par force et présente des corps de roulement en tant qu'éléments de blocage (4) qui sont disposés dans des fentes de clavetage entre la bague extérieure (2) et l'arbre (6), qui se rétrécissent dans une direction périphérique, et **en ce qu'**un angle de clavetage des fentes de clavetage devient plus aigu dans la direction de blocage.

7. Roue libre commutable selon la revendication 6, **caractérisée en ce que** l'angle de clavetage des fentes de clavetage est si aigu que la roue libre (1) reste de manière autobloquante dans la position d'engagement bloquante.

8. Roue libre commutable selon la revendication 7, **caractérisée en ce que** la bague extérieure (2) est radialement élastique dans les régions autobloquantes des fentes de clavetage.

9. Roue libre commutable selon la revendication 1, **caractérisée en ce que** la roue libre (1) présente un embrayage à friction commutable (16) qui permet de connecter par engagement par friction la cage à éléments de blocage (3) à l'arbre (6).

10. Roue libre commutable selon la revendication 9, **caractérisée en ce que** l'embrayage à friction (16) présente un élément de rappel (23) qui, lors du débrayage de l'embrayage à friction (16), exerce un couple dans la direction de la position de désengagement de la cage à éléments de blocage (3).

11. Frein de véhicule électromécanique, **caractérisé en ce que** le frein de véhicule (24) présente une roue libre (1) commutable selon l'une quelconque des revendications précédentes.
